(19) Europäisches Patentamt
European Patent Office
Office européen des brevets

(11) **EP 3 387 225 B1**

## (12) EUROPÄISCHE PATENTSCHRIFT

(45) Veröffentlichungstag und Bekanntmachung des Hinweises auf die Patenterteilung:
**08.01.2020 Patentblatt 2020/02**

(21) Anmeldenummer: **16801763.0**

(22) Anmeldetag: **25.11.2016**

(51) Int Cl.:
*F01M 1/16* (2006.01)   *F01M 5/00* (2006.01)
*F16N 29/02* (2006.01)   *F16H 57/04* (2010.01)

(86) Internationale Anmeldenummer:
**PCT/EP2016/078772**

(87) Internationale Veröffentlichungsnummer:
**WO 2017/097605 (15.06.2017 Gazette 2017/24)**

### (54) FLUIDVERSORGUNGSSYSTEM

FLUID SUPPLY SYSTEM

SYSTÈME D'ALIMENTATION EN FLUIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.12.2015 DE 102015224387**
**03.05.2016 DE 102016207655**

(43) Veröffentlichungstag der Anmeldung:
**17.10.2018 Patentblatt 2018/42**

(73) Patentinhaber: **Mahle International GmbH**
**70376 Stuttgart (DE)**

(72) Erfinder:
• **RUFFET, Valentin**
**73760 Ostfildern (DE)**
• **STEINHOFF, Michael**
**9122 St. Kanzian (AT)**

(74) Vertreter: **BRP Renaud & Partner mbB**
**Rechtsanwälte Patentanwälte**
**Steuerberater**
**Königstraße 28**
**70173 Stuttgart (DE)**

(56) Entgegenhaltungen:
WO-A1-2011/070604     WO-A1-2012/013232
WO-A1-2015/172792     FR-A1- 2 655 702
JP-A- H0 988 533      JP-A- S62 248 812
JP-A- 2009 275 583    JP-A- 2013 213 462
JP-U- H0 329 784      JP-U- H04 105 676

**Beschreibung**

Die vorliegende Erfindung betrifft ein Fluidversorgungssystem mit einer Komponente gemäß dem Oberbegriff des Anspruchs 1. Die Erfindung betrifft außerdem eine Brennkraftmaschine mit zumindest einem solchen Fluidversorgungssystem.

Aus der DE 199 43 294 A1 ist ein Fluidversorgungssystem einer Brennkraftmaschine mit einer Filtereinrichtung und einem stromauf dieser Filtereinrichtung temperaturabhärigig in den Fluidkreislauf einschaltbaren Kühler bekannt. In einem unteren und einem oberen Temperaturbereich durchströmt dabei zumindest ein überwiegender Volumenstrom den Kühler, während in einem dazwischen liegenden mittleren Temperaturbereich allenfalls ein nicht überwiegender Volumenstrom den Kühler durchströmt. Hierdurch soll die Temperatur des Fluids optimal an Betriebsbedingungen der Brennkraftmaschine angepasst werden können.

Aus der DE 199 02 408 A1 ist ein Automatikgetriebe für Fahrzeuge mit einem hydrodynamischen Wandler bekannt, der von einer Druckölpumpe über ein Hauptdruckventil mit Öl versorgt wird, wobei ein Wandlersicherheitsventil den Öldruck vor dem Wandler begrenzt und von der Ölzulaufleitung des Wandlers eine Schmierölleitung abzweigt, die ein Schmierventil enthält und wobei zudem ein Ölkühler vorgesehen ist. Dieser Ölkühler ist in einer Ölleitung zwischen dem Hauptdruckventil und der Abzweigung der Schmierölleitung angeordnet und besitzt einen Bypass, dessen Durchfluss gesteuert bzw. geregelt ist.

Aus der FR 2 655 702 A1 ist ein Fluidversorgungssystem mit einer Komponente bekannt, wobei ein in einem Kontrollkanal angeordnetes Bypassventil mit einem Ventilkörper vorgesehen ist, der zumindest zwischen einer ersten Stellung und einer zweiten Stellung verstellbar ist und der in der ersten Stellung einen Fluidkanal zur Komponente und in der zweiten Stellung einen die Komponente umgehenden Bypasskanal absperrt. Der Ventilkörper selbst trennt den Kontrollkanal in einen ersten Raum und einen zweiten Raum und weist zudem eine Leckageöffnung auf, die den ersten Raum mit dem zweiten Raum verbindet. Im zweiten Raum ist dabei ein Federelement angeordnet, das den Ventilkörper in seine zweite Stellung vorspannt. Der zweite Raum ist darüber hinaus über einen Leckagekanal mit einem Fluidreservoir verbunden, wobei in diesem Leckagekanal ein schaltbares Ventil zum zumindest teilweise Öffnen und Schließen des Leckagekanals angeordnet ist. Darüber hinaus vorgesehen ist zumindest eine Erfassungseinrichtung, die eine Eigenschaft des Fluids erfasst und an eine Steuerungseinrichtung übermittelt, die wiederum derart ausgebildet ist, dass sie das Ventil bei Erreichen einer vordefinierten Eigenschaft schließt und damit den Leckagekanal sperrt.

Aus der WO 2015/172792 A1 ist ein weiteres Fluidversorgungssystem mit einer Komponente bekannt.

Aus der JP S62-248812 A ist ein Fluidversorgungssystem mit einem Kontrollkanal und einem darin angeordneten Bypassventil bekannt. Das Bypassventil besitzt einen Ventilkörper, der zumindest zwischen einer ersten und einer zweiten Stellung verstellbar ist und der in der ersten Stellung einen Fluidkanal zur Komponente und in der zweiten Stellung einen die Komponente umgehenden Bypasskanal absperrt. Der Ventilkörper trennt dabei den Kontrollkanal in einen ersten und zweiten Raum und weist zudem eine Leckageöffnung auf, die den ersten Raum mit dem zweiten Raum verbindet.

Fluidversorgungssysteme in Brennkraftmaschinen, beispielsweise Ölfiltermodule, werden üblicherweise mit einem Kühler ausgestattet, um im Betrieb das Fluid, insbesondere das Öl, vor Schäden wegen zu hohen Temperaturen zu bewahren. Im kalten Zustand steigt jedoch der Druckverlust des kalten Fluides aufgrund der geänderten Fließeigenschaften, weshalb üblicherweise ein mit einem Dehnstoffelement ausgestattetes Bypassventil vorgesehen wird, das bei Unterschreiten bzw. bis zum Erreichen einer vordefinierten Temperatur einen Fluidstrom am Kühler vorbeiführt und erst bei Erreichen der vordefinierten Temperatur den Fluidstrom durch den Kühler, beispielsweise den Ölkühler, leitet. Hierdurch soll auch im kalten Zustand eine ausreichende Schmierung, beispielsweise einer Brennkraftmaschine oder von Lagerstellen, erreicht werden.

Alternativ zu den erwähnten Dehnstoffelementen können auch sogenannte Bimetallschalter oder FGL-Schalter eingesetzt werden, wobei sämtliche temperaturabhängigen Bypassschaltungen aufgrund der verwendeten Schalter, beispielsweise der Dehnstoffelemente, vergleichsweise aufwändig und teuer sind und darüber hinaus eine gewisse Trägheit besitzen, wodurch ein schnelles Schalten unmöglich wird. Besonders Bypassventile mit sogenannten Wachsdehnstoffelementen, benötigen darüber hinaus in der Regel mindestens eine Temperaturdifferenz von 10 Kelvin, um den Arbeitshub zu erreichen.

Die vorliegende Erfindung beschäftigt sich daher mit dem Problem, ein verbessertes Fluidversorgungssystem mit einer Bypassschaltung anzugeben, die insbesondere konstruktiv einfach, kostengünstig und schnell schaltend ausgebildet ist.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, für eine Bypassschaltung anstelle der hierfür bislang verwendeten Dehnstoffelemente nunmehr ein schaltbares Ventil, insbesondere ein Magnetventil, einzusetzen, dieses jedoch aufgrund seines vergleichsweise kleinen Arbeitshubes nicht direkt zur Schaltung eines Ventilkörpers des Bypassventils zu nutzen, sondern zum Öffnen bzw. Schließen eines Leckagekanals, der die zum Schalten des Ventilkörpers des Bypassventils erforderlichen Druckverhältnisse beeinflusst. Über das erfindungsgemäß vorgesehene Ventil wird somit kein Verstellen des Ventilkörpers selbst, sondern nur ein Beeinflussen der Druckverhältnisse bewirkt, die zum schnellen Verstellen des Ventilkörpers des Bypassventils führen. Das erfindungsgemäße Fluidversorgungssystem weist dabei eine Komponente, beispielsweise eine Filtereinrichtung zum Filtern des Fluids oder einen Kühler zum Kühlen des Fluids sowie einen diese Komponente umgehenden Bypasskanal auf. In einem Kontrollkanal ist dabei ein Bypassventil mit einem Ventilkörper angeordnet, der zumindest zwischen einer ersten und einer zweiten Stellung verstellbar ist und der in der ersten Stellung einen Fluidzufluss zur Komponente und in der zweiten Stellung einen Fluidfluss durch den Bypasskanal absperrt, oder umgekehrt. Zwischen den beiden Stellungen sind dabei selbstverständlich auch Zwischenstellungen möglich, in welchen ein Teilfluidstrom zur Komponente und ein Teilfluidstrom durch den Bypasskanal strömen. Der Ventilkörper des Bypassventils trennt dabei den Kontrollkanal in einen ersten und einen zweiten Raum und weist eine Leckageöffnung auf, die den ersten Raum mit dem zweiten Raum verbindet. Im zweiten Raum ist ein Federelement angeordnet, welches den Ventilkörper in seine zweite Stellung vorspannt, wobei der zweite Raum über einen Leckagekanal mit einem Fluidreservoir verbunden ist. In diesem Leckagekanal ist das erfindungsgemäße schaltbare Ventil, das Magnetventil, vorgesehen, mittels welchem der Leckagekanal geöffnet bzw. geschlossen werden kann. Ebenfalls vorgesehen ist eine Erfassungseinrichtung, die eine Eigenschaft, beispielsweise eine Temperatur, des Fluids erfasst und an eine Steuerungseinrichtung übermittelt, die wiederum derart ausgebildet ist, dass sie das Ventil bei Erreichen einer vordefinierten Temperatur schließt und damit den Leckagekanal sperrt. Erfassungseinrichtung und Steuerungseinrichtung können dabei selbstverständlich auch in einem Dehnstoffelement zusammengefasst sein. Mit dem erfindungsgemäßen Fluidversorgungssystem kann somit auf konstruktiv einfache und kostengünstige Weise ein schnell schaltendes Bypassventil geschaffen werden, dessen Schaltbewegung ausschließlich von der Federkraft des Federelements, der Stellung des Ventils und dem Druck des Fluids im ersten und zweiten Raum abhängt. Im Vergleich zu einem Dehnstoffelement kann dabei das Ventil vergleichsweise schnell schalten und damit die im zweiten Raum herrschenden Druckverhältnisse schnell beeinflussen, wodurch wiederum aufgrund der beispielsweise zwischen dem ersten und dem zweiten Raum herrschenden Druckdifferenz und der Federkraft ein schnelles Schalten des Ventilkörpers und damit des Bypassventils möglich sind. Von großem Vorteil ist dabei, dass zum Sperren des Leckagekanals ein bereits sehr kleiner Ventilhub des Ventils ausreicht, der von einem solchen Ventil bewerkstelligt werden kann, da der Leckagekanal im Vergleich zum Kontrollkanal einen sehr kleinen Querschnitt besitzt. Über die vergleichsweise kleine Stellbewegung des Ventils bzw. dessen Ventilkörpers kann somit ein großer Querschnitt des Kontrollkanals über den Ventilkörper des Bypassventils geschaltet werden.

Bei einer vorteilhaften Weiterbildung der erfindungsgemäßen Lösung ist das Fluidversorgungssystem als Schmierstoffversorgungssystem, insbesondere als Ölversorgungssystem, ausgebildet. Besonders bei Ölfiltermodulen ist aufgrund der Zähigkeit des Öls im kalten Zustand eine Durchleitung desselben durch einen Ölkühler unbedingt zu vermeiden, weshalb das erfindungsgemäße Bypassventil hier in vorteilhafter Weise eingesetzt werden kann, um eine schnelle und effektive Schmierung, beispielsweise der Brennkraftmaschine oder anderer Lagerstellen, sowohl in kaltem, als auch in warmem Zustand zu bewirken.

Bei einer weiteren vorteilhaften Ausführungsform der erfindungsgemäßen Lösung sind die Erfassungseinrichtung als Temperaturerfassungseinrichtung ausgebildet und die Steuerungseinrichtung derart, dass sie das Ventil bei Erreichen der Temperatur von T ≥ 117°C schließt. Bei einer Temperatur von T ≤ 117°C bleibt das Ventil hingegen offen, wodurch ein Leckagestrom zum Fluidreservoir, insbesondere zum Ölreservoir strömt und durch die Druckdifferenz zwischen dem ersten und dem zweiten Raum im Kontrollkanal der Ventilkörper des Bypassventils in seine erste Stellung, entgegen der Federkraft, gedrückt wird. Bei Erreichen der vordefinierten Temperatur von 117°C schließt das Ventil den Leckagekanal ab, so dass über diesen kein Fluidabfluss mehr in das Fluidreservoir erfolgen kann. Nach dem Absperren des Leckagekanals steigt der Druck im zweiten Raum an, bis dieser den Druck im ersten Raum erreicht, woraufhin lediglich noch die Federkraft des Federelements für die Verstellung des Ventilkörpers verantwortlich ist. Die beiden Drücke im ersten und zweiten Raum heben sich in diesem Fall auf. Aufgrund der Federkraft des Federelements wird der Ventilkörper des Bypassventils in seine zweite Stellung verstellt, in welcher der Bypasskanal zum Bypass geschlossen und der Fluidkanal zur Komponente geöffnet ist. In diesem Zustand wird somit der Fluidstrom über die Komponente geleitet.

Erfindungsgemäß ist der Ventilkörper als Ventilkolben ausgebildet, der eine mantelseitige erste Öffnung zum Bypasskanal und eine mantelseitige zweite Öffnung zur Komponente aufweist. Dies stellt lediglich eine mögliche Ausführungsform des erfindungsgemäßen Ventilkörpers dar, welche jedoch vergleichsweise einfach und kostengünstig herzustellen ist und zugleich vergleichsweise einfach die Druckverhältnisse im ersten und zweiten Raum ermöglicht. Hierzu ist beispielsweise die Leckageöffnung im Boden des Ventilkolbens angeordnet.

Bei einer vorteilhaften Weiterbildung der erfindungsgemäßen Lösung ist der Ventilkolben oder der Ventilkörper selbst aus Metall oder aus Kunststoff ausgebildet, wobei eine Ausbildung aus Metall eine besonders hohe Beständigkeit auch gegenüber aggressiven Fluiden ermöglicht. Demgegenüber kann durch eine Ausbildung des VentilkolbensNentilkörpers aus Kunststoff eine vergleichsweise kostengünstige Herstellung erreicht werden.

Erfindungsgemäß weist das Ventil ein Magnetventil auf oder ist als solches ausgebildet. Besonders die Ausführungsform als Magnetventil ermöglicht ein vergleichsweise schnelles Schalten und damit ein schnelles Reagieren.

Zweckmäßig kann die Komponente als Kühler, Getriebe oder Filtereinrichtung ausgebildet sein. Bereits diese nicht abschließende Aufzählung lässt erahnen, welch mannigfaltige Einsatzmöglichkeiten für das erfindungsgemäße Fluidversorgungssystem, insbesondere bei einer Brennkraftmaschine gegeben sind.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugzeichen auf gleiche oder ähnliche oder funktional gleiche Bauteile beziehen.

Dabei zeigen, jeweils schematisch

Fig. 1    ein erfindungsgemäßes Fluidversorgungssystem bei einer Fluideigenschaft unterhalb einer vordefinierten Eigenschaft,

Fig. 2    eine Darstellung wie in Fig. 1, jedoch bei einer Eigenschaft des Fluides oberhalb der vordefinierten Eigenschaft,

Fig. 3    ein beispielhaftes Fluidversorgungssystem mit einem anderen Ventil und bei einer Fluideigenschaft unterhalb einer vordefinierten Eigenschaft,

Fig. 4    eine Darstellung wie in Fig. 3, jedoch bei einer Eigenschaft des Fluides oberhalb der vordefinierten Eigenschaft.

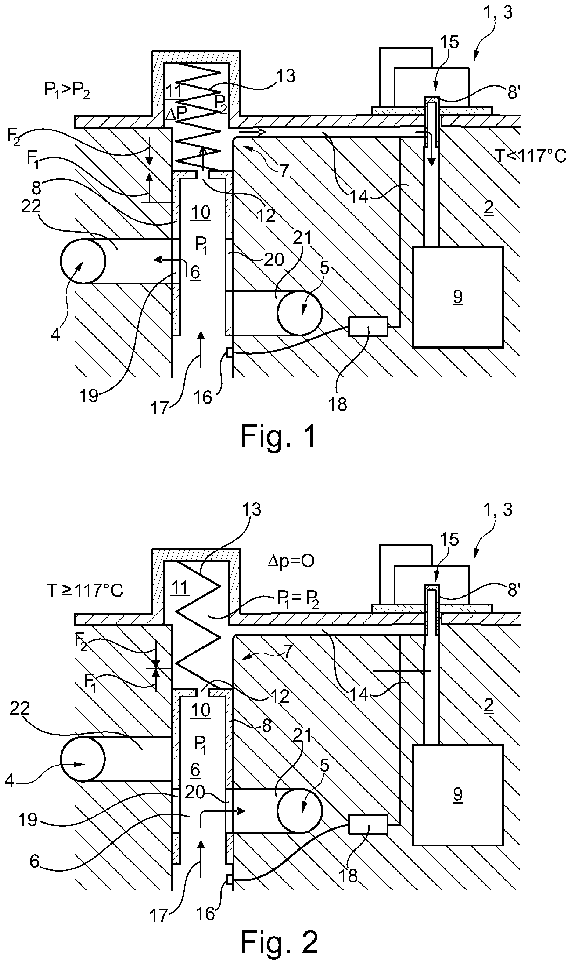

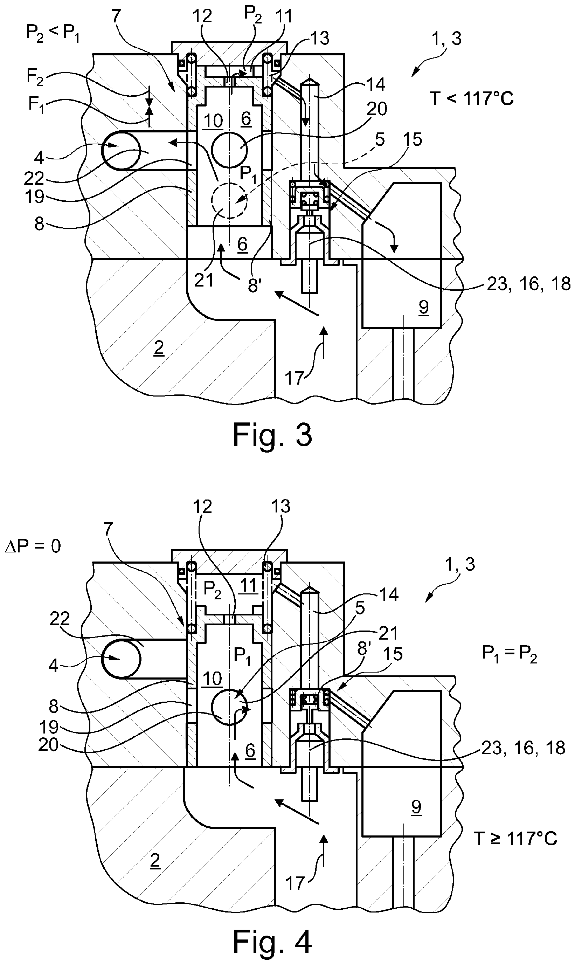

Entsprechend den Fig. 1 bis 4, weist ein erfindungsgemäßes Fluidversorgungssystem 1, insbesondere einer Brennkraftmaschine 2, beispielsweise ein Schmierstoffversorgungssystem und insbesondere ein Ölversorgungssystem 3, eine Komponente 5 sowie einen diesen umgehenden Bypass 4 auf. Die Komponente 5 kann beispielsweise als Kühler, Getriebe oder Filtereinrichtung ausgebildet sein. Gemäß den Fig. 1 bis 4 sind dabei lediglich der Fluidkanal 21 zur Komponente 5 und der Bypasskanal 22 zum Bypass 4 gezeigt, so dass sich die eigentliche Komponente 5 unterhalb der dargestellten Bildebene befindet. In einem Kontrollkanal 6 ist dabei ein Bypassventil 7 mit einem Ventilkörper 8 angeordnet, der zwischen einer ersten Stellung (vergleiche Fig. 1 und 3) und einer zweiten Stellung (vergleiche Fig. 2 und 4) verstellbar ist, und der in der ersten Stellung den Fluidkanal 21 zur Komponente 5 und in der zweiten Stellung den Bypasskanal 22 absperrt. Der Kontrollkanal 6 führt dabei indirekt über eine nicht gezeigte Fluidpumpe zu einem Fluidreservoir 9.

Betrachtet man den Kontrollkanal 6 näher, so kann man erkennen, dass der Ventilkörper 8 den Kontrollkanal 6 in einen ersten Raum 10 und einen zweiten Raum 11 unterteilt und zugleich eine Leckageöffnung 12 aufweist, die den ersten Raum 10 mit dem zweiten Raum 11 verbindet. Im zweiten Raum 11 ist darüber hinaus ein Federelement 13 angeordnet, das den Ventilkörper 8 in seine gemäß den Fig. 2 und 4 dargestellte zweite Stellung vorspannt. Der zweite Raum 11 ist darüber hinaus über einen Leckagekanal 14 mit dem Fluidreservoir 9 verbunden, wobei in dem Leckagekanal 14 ein Magnetventil 15, zum zumindest teilweise Öffnen/Schließen des Leckagekanals 14 angeordnet ist. Gemäß den Fig. 1 und 3 ist dabei das Ventil 15 in seiner Öffnungsstellung gezeigt, in welcher der zweite Raum 11 über den Leckagekanal 14 mit dem Fluidreservoir 9, welches drucklos ist, verbunden ist. Demgegenüber zeigen die Fig. 2 und 4 das Ventil 15 in seiner geschlossenen Stellung. Erfindungsgemäss weist das Ventil 15 ein Magnetventil auf. Besonders die Ausführungsform als Magnetventil, ermöglicht ein vergleichsweise schnelles Schalten und damit ein schnelles Reagieren.

Darüber hinaus weist das erfindungsgemäße Fluidversorgungssystem 1 gemäß den Figuren 1 und 2 eine Erfassungseinrichtung 16, beispielsweise eine Temperaturerfassungseinrichtung mit einem Temperatursensor, auf, die/der eine Eigenschaft, insbesondere die Temperatur, des Fluides 17, beispielsweise Öl oder Schmierstoff, erfasst und an eine Steuerungseinrichtung 18 übermittelt, die wiederum derart ausgebildet ist, dass sie das Ventil 15 bei Erreichen einer vordefinierten Eigenschaft, beispielsweise einer vordefinierten Temperatur T, schließt und damit den Leckagekanal 14 sperrt. Zu diesem Zweck ist die Steuerungseinrichtung 18 selbstverständlich auch mit dem Ventil 15 verbunden.

Gemäß den Fig. 3 und 4, die nicht die Erfindung darstellen, sind die Erfassungseinrichtung 16 und die Steuerungseinrichtung 18 in dem Dehnstoffelement 23 integriert bzw. durch dieses gebildet, so dass auf eine separate Erfassungseinrichtung 16 und eine separate Steuerungseinrichtung 18 verzichtet werden kann, was zu Kostenvorteilen führt.

In den Figuren 1 bis 4 ist die Erfassungseinrichtung 16 als Temperaturerfassungseinrichtung (Dehnstoffelement 23 erfasst auch die Temperatur) ausgebildet und erfasst demzufolge die Temperatur des Fluides 17. Die vordefinierte Temperatur T kann dabei beispielsweise bei $\geq 117°C$ liegen, so dass gemäß den Fig. 1 und 3 ein Zustand des erfindungsgemäßen Fluidversorgungssystems 1 bei einer Temperatur $T < 117°C$ und gemäß den Fig. 2 und 4 bei einer Temperatur $T \geq 117°C$ gezeigt ist.

Betrachtet man den Ventilkörper 8 näher, so kann man erkennen, dass dieser als Ventilkolben ausgebildet ist, der eine mantelseitige erste Öffnung 19 und eine mantelseitige zweite Öffnung 20 aufweist, wobei je nach Schaltstellung des Ventilkörpers 8 die erste Öffnung 19 mit dem Bypasskanal 22 zum Bypass 4 fluchtet, während die zweite Öffnung 20 in der zweiten Stellung mit dem Fluidkanal 21 zur Komponente 5 fluchtet. Die Leckageöffnung 12 ist dabei in einem Boden des Ventilkörpers 8 angeordnet. Der Ventilkolben selbst kann beispielsweise aus Metall oder aus Kunststoff ausgebildet sein, wobei die Ausbildung aus Metall einen besonders hohen Widerstand gegen sämtliche Fluide 17 bietet, während eine Ausführung aus Kunststoff vergleichsweise kostengünstig hergestellt werden kann.

Das erfindungsgemäße Fluidversorgungssystem 1 funktioniert dabei gemäß den Fig. 1 bis 4 bei einer als Temperaturerfassungseinrichtung ausgebildeten Erfassungseinrichtung 16 wie folgt:

Bei einer Temperatur T < 117°C stellt sich die gemäß den Fig. 1 und 3 dargestellte Situation ein, bei welcher die Temperaturerfassungseinrichtung 16 (respektive das Dehnelement 23 in Fig. 3) die Temperatur erfasst, an die Steuerungseinrichtung 18 weiterleitet und diese daraufhin das Ventil 15 geöffnet hält. Das in den Kontrollkanal 6 einströmende Fluid 17 erzeugt somit im ersten Raum 10 einen Druck $P_1$, wobei es über die Leckageöffnung 12 in den zweiten Raum 11 strömen kann und über diesen und den geöffneten Leckagekanal 14 in das Fluidreservoir 9. Das Fluidreservoir 9 ist dabei üblicherweise drucklos, wobei jedoch ein Ventilkörper 8' des Ventils 15 beispielsweise als Drossel ausgebildet sein kann, so dass sich im zweiten Raum 11 nicht der Umgebungsdruck einstellt, sondern lediglich ein im Hinblick auf den im ersten Raum 10 herrschenden Druck $P_1$ reduzierter Druck $P_2$. Zwischen dem ersten Raum 10 und dem zweiten Raum 11 stellt sich somit eine Druckdifferenz $\Delta P$ ein, die der Federkraft des Federelements 13 entgegenwirkt. Die im vorliegenden Fall von unten auf den Ventilkörper 8 einwirkende Kraft $F_1$ bemisst sich dabei zu

$$F_1 = P_1 \cdot A_{\text{(Ventilkörper)}} - \Delta P \cdot A_{\text{(Ventilkörper)}},$$

wogegen sich die von oben auf den Ventilkörper 8 wirkende Kraft $F_2$ wie folgt bemisst:

$$F_2 = \Delta P \cdot A_{\text{(Ventilkörper)}} + F_{\text{(Feder)}}$$

und wobei gilt

$$F_1 > F_2.$$

Hierdurch verschiebt sich der Ventilkörper 8 nach oben, bis die erste mantelseitige Öffnung 19 mit dem zu beispielsweise einer Filtereinrichtung führenden Bypasskanal 22 fluchtet und das Fluid 17 in den Bypass 4 strömen kann. Ein kleiner Leckagestrom des Fluides 17 kann auch über die Leckageöffnung 12 in den zweiten Raum 11 und über den Leckagekanal 14 in das Fluidreservoir 9 gelangen. Bei Erreichen der vordefinierten Temperatur T von $\geq$ 117°C, schaltet das Bypassventil 7 in die gemäß den Fig. 2 und 4 dargestellte Stellung, da bei Erreichen der vordefinierten Temperatur T die Steuerungseinrichtung 18 ein entsprechendes Signal an das Ventil 15 übermittelt und dieses daraufhin den Ventilkörper 8' in seine Schließstellung überführt und den Leckagekanal 14 sperrt. Erfindungsgemäss ist das Ventil 15 als Magnetventil ausgebildet, so erfolgt ein Öffnen und Schließen vergleichsweise schnell, während bei einem Ventil 15 mit einem Dehnelement 23 ein langsameres Öffnen/Schließen erfolgt. Im letzten Fall der nicht Teil der Erfindung ist, kann dafür auf eine separate Erfassungseinrichtung 16 und eine ebenfalls separate Steuerungseinrichtung 18 sowie die zugehörige Verkabelung verzichtet werden, da diese in diesem Fall durch das Dehnstoffelement 23 bereitgestellt werden, was Kostenvorteile bringt.

Da der Leckagekanal 14 im Vergleich zum Kontrollkanal 6 einen deutlich verringerten Querschnitt hat, kann hier auch ein einen lediglich geringen Ventilhub aufweisendes aber gleichzeitig schnell schaltendes Ventil 15 eingesetzt werden. Nach dem Schließen des Ventils 15 steigt der Druck $P_2$ im zweiten Raum 11 auf den Druck $P_1$ im ersten Raum 10, woraus ein $\Delta P$ von 0 ergibt. In diesem Fall erfolgt somit keinerlei druckabhängige Verstellung des Ventilkörpers 8 des Bypassventils 7 mehr, da die von unten auf den Ventilkörper 8 druckbedingt wirkende Kraft $F_1$ der von oben auf den Ventilkörper 8 ausschließlich druckbedingten Kraft $F_2$ entspricht. Trotzdem ist selbstverständlich die von oben auf den Ventilkörper 8 wirkende Kraft $F_2$ größer als die Kraft $F_1$, da von oben zusätzlich noch die Kraft $F_{\text{(Feder)}}$ des Federelements 13 auf den Ventilkörper 8 wirkt. Es gilt somit für den gemäß den Fig. 2 und 4 dargestellten Zustand:

$$F_2 > F_1$$

mit

$$F_2 = P_2 \cdot A_{\text{(Ventilkörper)}} + F_{\text{(Feder)}}; \quad \text{und} \quad F_1 = P_1 \cdot A_{\text{(Ventilkörper)}}$$

Mit dem erfindungsgemäßen Bypassventil 7 und dem erfindungsgemäßen Fluidversorgungssystem 1 ist eine Steuerung des Ventilkörpers 8 des Bypassventils 7 über die Federkraft $F_{(Feder)}$ über den Fluiddruck $P_1$, $P_2$ und über die Stellung des Ventilkörpers 8' des Ventils 15 möglich. Je nachdem, ob das Ventil 15 geöffnet oder geschlossen ist, kann über eine gezielte Auslegung der Federkraft $F_{(Feder)}$ des Federelements 13 der Ventilkörper 8 den Bypasskanal 22 zum Bypass 4 öffnen bzw. schließen.

Sofern das Ventil 15 als Magnetventil oder als elektrisch schaltbares Ventil ausgebildet ist, kann es selbstverständlich derart ausgestaltet sein, dass es eine sogenannte fail-safe-Funktion erfüllt, das heißt es muss bestromt werden, um in den gemäß den Fig. 1 und 3 dargestellten (Öffnungs-)zustand überführt zu werden. Stromlos verbleibt das Ventil 15 im geschlossenen Zustand, so dass das Fluid 17 bzw. das Öl immer über die Komponente 5 geleitet wird und Beschädigungen vermieden werden können.

Die in den Fig. 1 bis 4 dargestellte vordefinierte Temperatur T = 117°C stellt selbstverständlich lediglich eine mögliche Temperatur dar, die beispielsweise für Öl als Fluid 17 gilt. Als Erfassungsgröße können selbstverständlich auch andere Parameter dienen.

Mit dem erfindungsgemäßen Fluidversorgungssystem 1 ist somit ein vergleichsweise schnelles Schalten des Bypassventils 7 möglich, ohne dass hierfür eine Betätigungseinrichtung mit einem vergleichsweise großen Ventilhub erforderlich wäre, da der Ventilhub des Ventils 15 zur Steuerung des Ventilkörpers 8 im Leckagekanal 14 völlig ausreichend ist, um die Druckverhältnisse $P_1$, $P_2$ zu beeinflussen und dadurch das Bypassventil 7 zu steuern. Wird für das Ventil 15 ein Magnetventil eingesetzt, so kann im Vergleich zu Wachsdehnstoffelementen zur Steuerung des Bypassventils 7 eine deutlich schnellere Reaktionszeit des Bypassventils 7 erreicht werden. Zugleich kann dieses kostengünstiger und konstruktiv einfach ausgebildet werden.

## Patentansprüche

1.  Fluidversorgungssystem (1) mit einer Komponente (5),

    - mit einem in einem Kontrollkanal (6) angeordneten Bypassventil (7) mit einem Ventilkörper (8), der zumindest zwischen einer ersten und einer zweiten Stellung verstellbar ist und der in der ersten Stellung einen Fluidkanal (21) zur Komponente (5) und in der zweiten Stellung einen die Komponente (5) umgehenden Bypasskanal (22) absperrt,
    - wobei der Ventilkörper (8) den Kontrollkanal (6) in einen ersten und einen zweiten Raum (10,11) trennt und eine Leckageöffnung (12) aufweist, die den ersten Raum (10) mit dem zweiten Raum (11) verbindet,
    - wobei im zweiten Raum (11) ein Federelement (13) angeordnet ist, das den Ventilkörper (8) in seine zweite Stellung vorspannt,
    - wobei der zweite Raum (11) über einen Leckagekanal (14) mit einem Fluidreservoir (9) verbunden ist,
    - wobei in dem Leckagekanal (14) ein schaltbares Ventil (15) zum zumindest teilweise Öffnen/Schließen des Leckagekanals (14) angeordnet ist,
    - wobei zumindest eine Erfassungseinrichtung (16) vorgesehen ist, die eine Eigenschaft des Fluids (17) erfasst und an eine Steuerungseinrichtung (18) übermittelt, die wiederum derart ausgebildet ist, dass sie das Ventil (15) bei Erreichen einer vordefinierten Eigenschaft schließt und damit den Leckagekanal (14) sperrt,

    **dadurch gekennzeichnet,**

    - **dass** das Ventil (15) ein Magnetventil ist,
    - **dass** der Ventilkörper (8) als Ventilkolben ausgebildet ist, der eine mantelseitige erste Öffnung (19) zum Bypasskanal (22) und eine mantelseitige zweite Öffnung (20) zur Komponente (5) aufweist.

2.  Fluidversorgungssystem nach Anspruch 1,
    **dadurch gekennzeichnet,**
    **dass** das Fluidversorgungssystem (1) als Schmierstoffversorgungssystem, insbesondere als Ölversorgungssystem (3), ausgebildet ist.

3.  Fluidversorgungssystem nach Anspruch 1 oder 2,
    **dadurch gekennzeichnet,**
    **dass** die Erfassungseinrichtung (16) als Temperaturerfassungseinrichtung ausgebildet ist und dass die Steuerungseinrichtung (18) derart ausgebildet ist, dass sie das Ventil (15) bei Erreichen der Temperatur von T ≥ 117 °C schließt.

4.  Fluidversorgungssystem nach einem der Ansprüche 1 bis 3,

**dadurch gekennzeichnet,**
**dass** die Leckageöffnung (12) in einem Boden des Ventilkolbens angeordnet ist.

5. Fluidversorgungssystem nach einem der vorhergehenden Ansprüche,
**dadurch gekennzeichnet,**
**dass** der Ventilkörper (8) aus Metall oder aus Kunststoff ausgebildet ist.

6. Fluidversorgungssystem nach einem der vorhergehenden Ansprüche,
**dadurch gekennzeichnet,**
**dass** die Komponente (5) als Kühler, Getriebe oder Filtereinrichtung ausgebildet ist.

7. Brennkraftmaschine (2) mit einem Fluidversorgungssystem (1) nach einem der vorhergehenden Ansprüche.

**Claims**

1. Fluid supply system (1) having a component (5),

   - having a bypass valve (7) which is arranged in a control channel (6) and has a valve body (8) which can be adjusted at least between a first and a second position and which, in the first position, blocks a fluid channel (21) to the component (5) and, in the second position, blocks a bypass channel (22) which bypasses the component (5),
   - wherein the valve body (8) separates the control channel (6) into first and second spaces (10,11) and has a leakage opening (12) connecting the first space (10) to the second space (11),
   - wherein a spring element (13) is arranged in the second space (11) and biases the valve body (8) into its second position,
   - wherein the second space (11) is connected to a fluid reservoir (9) via a leakage channel (14),
   - wherein a switchable valve (15) for at least partially opening/closing the leakage channel (14) is arranged in the leakage channel (14),
   - wherein at least one detection device (16) is provided, which detects a characteristic of the fluid (17) and transmits it to a control device (18), which in turn is configured such that it closes the valve (15) when a predefined characteristic is reached and thus blocks the leakage channel (14),

   **characterised in**

   - **that** the valve (15) is a solenoid valve,
   - **that** the valve body (8) is in the form of a valve piston which has a first shell-side opening (19) to the bypass channel (22) and a second shell-side opening (20) to the component (5).

2. Fluid supply system according to claim 1,
**characterised in**
**that** the fluid supply system (1) is configured as a lubricant supply system, in particular as an oil supply system (3).

3. Fluid supply system according to claim 1 or 2,
**characterised in**
**that** the detection device (16) is configured as a temperature detection device and in that the control device (18) is configured in such a way that it closes the valve (15) when the temperature of $T \geq 117°C$ is reached.

4. Fluid supply system according to any one of claims 1 to 3,
**characterised in**
**that** the leakage opening (12) is arranged in a bottom of the valve piston.

5. Fluid supply system according to any one of the preceding claims,
**characterised in**
**that** the valve body (8) is formed from metal or from plastic.

6. Fluid supply system according to any one of the preceding claims,
**characterised in**

**that** the component (5) is configured as a radiator, transmission or filter device.

7. Internal combustion engine (2) with a fluid supply system (1) according to any one of the preceding claims.

**Revendications**

1. Système d'alimentation en fluide (1) avec un élément (5),

   - avec une soupape de dérivation (7), disposée dans un canal de vérification (6), avec un corps de soupape (8), qui peut être déplacé au moins entre une première et une deuxième position et qui ferme, dans la première position, un canal de fluide (21) menant à l'élément (5) et, dans la deuxième position, un canal de dérivation (22) contournant l'élément (5),
   - dans lequel le corps de soupape (8) sépare le canal de vérification (6) en une première et une deuxième chambre (10, 11) et présente une ouverture de fuite (12), qui relie la première chambre (10) à la deuxième chambre (11),
   - dans lequel un élément ressort (13), qui précontraint le corps de soupape (8) dans la deuxième position de celui-ci, est disposé dans la deuxième chambre (11),
   - dans lequel la deuxième chambre (11) est reliée à un réservoir de fluide (9) par l'intermédiaire d'un canal de fuite (14),
   - dans lequel une soupape (15) commutable destinée à ouvrir/fermer au moins en partie le canal de fuite (14) est disposée dans le canal de fuite (14),
   - dans lequel au moins un dispositif de détection (16) est prévu, qui détecte une propriété du fluide (17) et la transmet à un dispositif de commande (18), qui est conçu à son tour de telle sorte qu'il ferme la soupape (15) lorsqu'une propriété prédéfinie est atteinte et bloque donc le canal de fuite (14),

   **caractérisé en ce**

   - **que** la soupape (15) est une électrovanne,
   - **que** le corps de soupape (8) est réalisé en tant que corps de soupape, qui présente une première ouverture (19) côté enveloppe menant au canal de dérivation (22) et une deuxième ouverture (20) côté enveloppe menant à l'élément (5).

2. Système d'alimentation en fluide selon la revendication 1,
   **caractérisé en ce**
   que le système d'alimentation en fluide (1) est réalisé en tant que système d'alimentation en lubrifiant, en particulier en tant que système d'alimentation en huile (3).

3. Système d'alimentation en fluide selon la revendication 1 ou 2,
   **caractérisé en ce**
   que le dispositif de détection (16) est réalisé en tant que dispositif de détection de température et que le dispositif de commande (18) est réalisé de telle sorte qu'il ferme la soupape (15) lorsque la température de $T \geq 117\ °C$ est atteinte.

4. Système d'alimentation en fluide selon l'une quelconque des revendications 1 à 3,
   **caractérisé en ce**
   que l'ouverture de fuite (12) est disposée dans un fond du corps de soupape.

5. Système d'alimentation en fluide selon l'une quelconque des revendications précédentes,
   **caractérisé en ce**
   que le corps de soupape (8) est réalisé en métal ou en plastique.

6. Système d'alimentation en fluide selon l'une quelconque des revendications précédentes,
   **caractérisé en ce**
   que l'élément (5) est réalisé en tant que radiateur, transmission ou dispositif de filtre.

7. Moteur à combustion interne (2) avec un système d'alimentation en fluide (1) selon l'une quelconque des revendications précédentes.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19943294 A1
- DE 19902408 A1
- FR 2655702 A1
- WO 2015172792 A1
- JP S62248812 A